# DEMANDE DE BREVET EUROPEEN

(11) **EP 2 145 790 A1**
(43) Date de publication de la demande: **20.01.2010**
(21) Numéro de dépôt: 09163396.6
(22) Date de dépôt: 22.06.2009
(51) Int. Cl.: B60J 7/14, B60J 1/18

(54) **Toit escamotable pour véhicule automobile et véhicule automobile équipé d'un tel toit**

(30) Priorité: 15.07.2008 FR 0854791
(71) Demandeur: PEUGEOT CITROËN AUTOMOBILES S.A., 78140 Vélizy Villacoublay (FR)
(72) Inventeur: Le Coquil, Serge, 91330, YERRES (FR)

(57) **Abrégé**

Toit escamotable pour véhicule automobile comprenant un premier élément (6) incluant le pavillon (6a) et un second élément (7) incluant la lunette arrière (7a), articulés l'un à l'autre et déplaçables entre une position de fermeture dans laquelle les deux éléments (6, 7) recouvrent l'habitacle (8) du véhicule et une position de rangement dans laquelle les deux éléments (6, 7) sont repliés l'un sur l'autre et rangés dans le coffre arrière (3) du véhicule, **caractérisé en ce que** le premier élément (6) comporte à l'arrière du pavillon (6a) et de chaque côté de celui-ci, un prolongement constituant une partie (9) du flanc latéral de la lunette arrière (7a) et en ce que le second élément (7) comporte de chaque côté de la lunette arrière (7a), un prolongement constituant la partie inférieure (10) du flanc latéral de la lunette arrière (7a).

## Description

La présente invention concerne un toit escamotable pour véhicule automobile qui permet de transformer un véhicule de type coupé ou berline en cabriolet.

On connaît notamment selon les documents FR 2854352 et WO 03/072380 des toits escamotables comprenant un premier élément incluant le pavillon et un second élément incluant la lunette arrière, articulés l'un à l'autre et déplaçables entre une position de fermeture dans laquelle les deux éléments recouvrent l'habitacle du véhicule et une position de rangement dans laquelle les deux éléments sont repliés l'un sur l'autre et rangés dans le coffre arrière du véhicule.

Dans le cas du document FR 2854352, le premier élément et le second élément sont composés chacun de plusieurs parties distinctes qui rendent la structure du toit escamotable très complexe.

De plus, dans les toits escamotables décrits dans ces deux documents, l'articulation entre le ou les éléments constituant le pavillon et le ou les éléments constituant la lunette arrière et l'agencement de ces différents éléments sont tels que le joint disposé entre la vitre latérale du véhicule, et d'une part le bord longitudinal du pavillon et d'autre part le bord du flanc latéral de la lunette arrière, est discontinu.

Cette discontinuité du joint nuit à l'esthétique et à l'étanchéité.

Il existe par ailleurs un besoin d'augmenter l'habitabilité des places arrière dans les véhicules équipés de toits escamotables.

Toutefois, pour satisfaire ce besoin, il faudrait augmenter la longueur du pavillon.

Ainsi, dans certains toits escamotables connus, l'élément formant le pavillon est divisé en deux sous-éléments articulés entre eux.

Cependant, cette solution complique la structure et le mécanisme qui commande le déplacement des éléments vers le coffre arrière.

De plus, cette solution crée entre les éléments des joints visibles supplémentaires qui nuisent encore davantage à l'esthétique et à l'étanchéité du toit.

Par ailleurs, un toit escamotable comportant un pavillon relativement long s'étendant le plus loin possible vers l'avant du véhicule pour augmenter l'agrément, lorsque le toit est ouvert et donc disposé dans sa position de rangement, pose un problème pour ranger le toit dans le coffre du véhicule.

Le but de la présente invention est d'apporter des solutions aux problèmes évoqués ci-dessus.

Ce but est atteint, selon l'invention, grâce à un toit escamotable pour véhicule automobile comprenant un premier élément incluant le pavillon et un second élément incluant la lunette arrière, articulés l'un à l'autre et déplaçables entre une position de fermeture dans laquelle les deux éléments recouvrent l'habitacle du véhicule et une position de rangement dans laquelle les deux éléments sont repliés l'un sur l'autre et rangés dans le coffre arrière du véhicule, **caractérisé en ce que** le premier élément comporte à l'arrière du pavillon et de chaque côté de celui-ci, un prolongement constituant une partie du flanc latéral de la lunette arrière et en ce que le second élément comporte de chaque côté de la lunette arrière, un prolongement constituant la partie inférieure du flanc latéral de la lunette arrière.

Ainsi, lorsque les deux éléments sont repliés dans le coffre, la partie inférieure de chacun des deux flancs latéraux de la lunette arrière est repliée sous le pavillon, de sorte que la longueur en porte à faux de l'ensemble est diminuée.

En effet, le second élément est articulé à l'arrière du pavillon et est déplaçable par rapport au premier élément vers une position repliée dans laquelle chacune des deux parties inférieures du flanc latéral de la lunette arrière est située en regard d'un bord longitudinal du pavillon.

Cette disposition permet de réduire l'encombrement en hauteur de l'ensemble des deux éléments repliés, de sorte qu'il subsiste, dans le coffre sous les deux éléments repliés, un espace de rangement ayant une hauteur optimale.

Selon une version préférée de l'invention, lorsque le toit escamotable est en position de fermeture, l'extrémité inférieure du bord arrière de chacune des parties de flanc latéral portées par le pavillon rejoint le bord adjacent de la caisse du véhicule, de sorte que le joint entre le premier élément et la vitre latérale du véhicule est continu.

Ainsi, la jonction entre les deux éléments du toit escamotable ne s'effectue pas au niveau du pavillon proprement dit, mais sur les prolongements vers l'arrière du pavillon qui constituent chacun une partie du flanc latéral de la lunette arrière.

De ce fait, ce joint continu améliore l'esthétique et est favorable à l'égard de l'étanchéité.

De préférence également, lorsque le toit escamotable est en position de fermeture, l'extrémité supérieure du bord arrière de chacune des parties de flanc latéral portées par le pavillon est située sensiblement au milieu de la lunette arrière.

Selon un mode de réalisation de l'invention, les deux éléments sont déplaçables vers la position de rangement dans le coffre du véhicule grâce à un système de bielles formant un parallélogramme déformable, la bielle arrière de ce système de bielles étant constituée par le second élément.

Cette disposition simplifie la réalisation du mécanisme de déplacement du toit escamotable.

De préférence, en position de rangement dans le coffre, le premier élément s'étend sensiblement horizontalement à la partie supérieure du coffre, les deux parties de flanc s'étendant vers l'arrière, chacune près d'une face latérale du coffre, le bord avant du pavillon étant dirigé vers l'habitacle du véhicule.

Lorsque le pavillon est relativement long, en position de rangement dans le coffre, la partie avant du pavillon peut faire saillie à l'intérieur de l'habitacle.

L'invention concerne également un véhicule automobile équipé d'un toit escamotable selon l'invention.

Dans le cas d'un véhicule automobile comprenant deux sièges avant et une banquette arrière, de préférence, la partie supérieure du dossier de la banquette arrière est montée de façon pivotante entre une position normale dans laquelle elle est située dans le prolongement du reste du dossier et une position dans laquelle elle est repliée vers le bas et dégage une ouverture de communication avec le coffre arrière et lorsque le toit escamotable est rangé dans le coffre, une partie du pavillon traverse cette ouverture et s'étend au-dessus de la partie supérieure repliée du dossier de la banquette arrière.

Bien entendu, dans ce cas, la banquette arrière n'est pas utilisable lorsque le véhicule est en position cabriolet.

De préférence également, le bord supérieur de la partie supérieure pivotante du dossier de la banquette arrière porte une tablette qui lorsque cette partie supérieure est repliée vers le bas, est adaptée pour masquer la partie du pavillon s'étendant au-dessus de ladite partie supérieure.

De préférence, la lunette arrière comporte, près de son bord inférieur un élément de tablette, qui lorsque le toit escamotable est en position de fermeture est partiellement recouvert par la tablette portée par la partie supérieure pivotante du dossier ou recouvre celle-ci.

Afin de renforcer la structure du véhicule, une tôle de renfort reliée au plancher du véhicule, s'étend derrière le dossier de la banquette arrière.

D'autres particularités et avantages de l'invention apparaîtront encore tout au long de la description ci-après.

Aux dessins annexés, donnés à titre d'exemples, non limitatifs :
- la figure 1 est une vue schématique latérale et partielle d'un véhicule automobile équipé d'un toit escamotable selon l'invention,
- la figure 2 est une vue en perspective du premier élément incluant le pavillon du toit escamotable selon l'invention,
- la figure 3 est une vue en perspective du second élément incluant la lunette arrière du toit escamotable selon l'invention,
- la figure 4 est une vue en perspective des deux éléments du toit escamotable, en position repliée,
- la figure 5 est une vue en perspective montrant l'arrière du véhicule et le toit escamotable en position repliée dans le coffre arrière,
- la figure 6 est une vue analogue à la figure 1, montrant le toit escamotable selon l'invention en position repliée dans le coffre, l'avant du pavillon étant engagé dans l'habitacle,
- la figure 7 est une vue schématique montrant une tablette fixée sur le bord supérieur du dossier de la banquette arrière et un élément de tablette fixé à la lunette arrière.

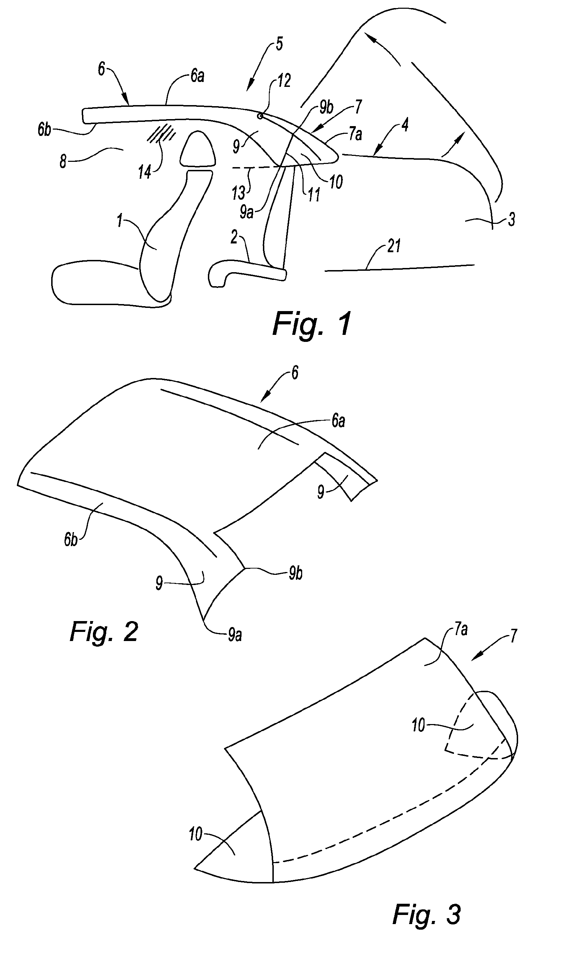

La figure 1 représente schématiquement un véhicule automobile comportant, de manière classique, deux sièges avant 1, une banquette arrière 2, un coffre arrière 3 muni d'un couvercle 4 et un toit escamotable 5 selon l'invention.

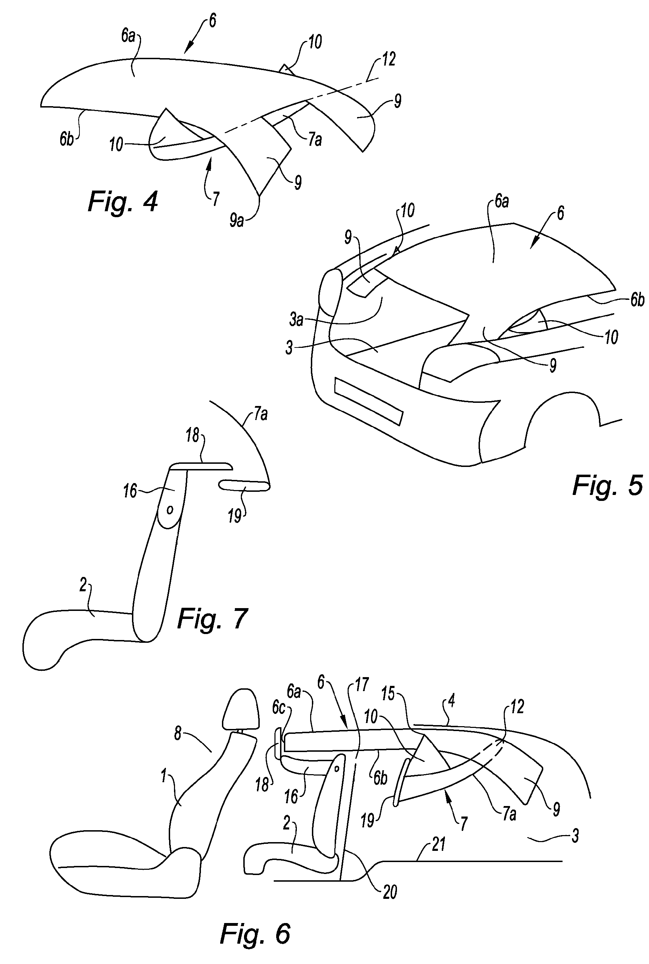

Le toit escamotable 5 comprend un premier élément 6 incluant le pavillon 6a et un second élément 7 incluant la lunette arrière 7a, articulés l'un à l'autre et déplaçables entre une position de fermeture (voir figure 1) dans laquelle les deux éléments 6, 7 recouvrent l'habitacle 8 du véhicule et une position d'ouverture, dite aussi position de rangement, (voir figure 6) dans laquelle les deux éléments 6, 7 sont repliés l'un sur l'autre et rangés dans le coffre arrière 3 du véhicule.

Conformément à l'invention, le premier élément 6 comporte (voir figure 2) à l'arrière du pavillon 6a et de chaque côté de celui-ci, un prolongement constituant une partie 9 du flanc latéral de la lunette arrière 7a et le second élément 7 comporte de chaque côté de la lunette arrière 7a, un prolongement constituant la partie inférieure 10 du flanc latéral de la lunette arrière 7a.

Lorsque le toit escamotable 5 recouvre l'habitacle 8 comme indiqué sur la figure 1, les deux parties inférieures 10 de flanc latéral de la lunette arrière 7a se joignent aux parties supérieures de flanc latéral 9 suivant une ligne 11. Ainsi, les deux parties inférieures 10 et les deux parties supérieures 9 de flanc latéral forment les montants latéraux de l'encadrement de la lunette arrière 7a.

Le bord avant de la lunette arrière 7a du second élément 7 est articulé au bord arrière du pavillon 6a suivant un axe 12 (voir figures 1, 4 et 6).

Le second élément 7 est ainsi déplaçable par rapport au premier élément 6 vers une position repliée (voir figures 4, 5 et 6) dans laquelle chacune des deux parties inférieures 10 du flanc latéral de la lunette arrière 7a est située en regard d'un bord longitudinal 6b du pavillon 6a.

La figure 1 montre que lorsque le toit escamotable 5 est en position de fermeture, l'extrémité inférieure 9a du bord arrière de chacune des parties de flanc latéral 9 portées par le pavillon 6a rejoint le bord adjacent 13 de la caisse du véhicule, de sorte que le joint entre le premier élément 6 et la vitre latérale 14 du véhicule est continu, sur toute la longueur du pavillon, y compris la partie de flanc 9.

De même lorsque le toit escamotable est en position de fermeture (voir figure 1), l'extrémité supérieure 9b du bord arrière de chacune des parties 9 de flanc latéral portées par le pavillon 6a est située sensiblement au milieu de la lunette arrière 7a.

Les deux éléments 6, 7 sont déplaçables vers la position de rangement dans le coffre 3 du véhicule grâce à un système connu de bielles formant un parallélogramme déformable, la bielle arrière de ce système de bielles étant constituée par le second élément 7.

A cet effet, ce second élément 7 est articulé à la caisse du véhicule suivant un axe 15 situé à l'extrémité des parties de flanc 10 (voir figure 6).

Les figures 5 et 6 montrent qu'en position de rangement dans le coffre 3, le premier élément 6 s'étend sensiblement horizontalement à la partie supérieure du coffre 3, les deux parties de flanc 9 s'étendant vers l'arrière, chacun près d'une face latérale 3a du coffre 3, le bord avant 6c du pavillon 6a étant dirigé vers l'habitacle 8 du véhicule.

Dans cet exemple, du fait de la longueur relativement importante du pavillon 6a la partie avant de ce pavillon fait saillie à l'intérieur de l'habitacle 8.

Cependant, la longueur en porte à faux du pavillon 6a à l'intérieur du coffre 3 est limitée, du fait que les parties inférieures de flanc 10 ont été escamotées.

Dans l'exemple représenté sur les figures 6 et 7, la partie supérieure 16 du dossier de la banquette arrière 2 est montée de façon pivotante entre une position normale (voir figure 7) dans laquelle elle est située dans le prolongement du reste du dossier et une position (voir figure 6) dans laquelle cette partie supérieure 16 est repliée vers le bas et dégage une ouverture 17 de communication avec le coffre arrière 3.

Lorsque le toit escamotable est rangé dans le coffre 3, comme montré sur la figure 6, une partie du pavillon 6a traverse l'ouverture 17 et s'étend au-dessus de la partie supérieure 16 repliée du dossier de la banquette arrière 2.

Les figures 6 et 7 montrent d'autre part que le bord supérieur de la partie supérieure 16 pivotante du dossier porte une tablette 18 qui lorsque cette partie supérieure 16 est repliée vers le bas, est adaptée pour masquer la partie du pavillon 6a s'étendant au-dessus de la partie supérieure 16 du dossier.

La figure 7 montre en outre que la lunette arrière comporte près de son bord inférieur un élément de tablette 19, qui lorsque le toit escamotable est en position de fermeture est partiellement recouverte par la tablette 18 portée par le dossier de la banquette arrière 2.

En variante, l'élément de tablette 19 pourrait recouvrir partiellement la tablette 18 portée par la partie pivotante 16 de la banquette arrière 2.

Par conséquent, dans la position montrée sur la figure 7, la tablette 18 et l'élément de tablette 19 ferment l'espace compris entre le dossier de la banquette arrière 2 et la lunette arrière 7a.

La figure 6 montre que la position occupée par l'élément de tablette 19, lorsque le toit est replié dans le coffre 3, n'encombre pas l'espace de rangement disponible sous le toit replié.

Le pivotement de la partie supérieure 16 du dossier de la banquette arrière 2 peut être commandé manuellement ou automatiquement, par exemple, par une biellette reliant cette partie pivotante 16 à l'élément 7.

La figure 6 montre d'autre part qu'il existe derrière le dossier de la banquette arrière 2, une tôle sensiblement verticale 20 s'étendant sur toute la largeur du coffre 3 et reliée au plancher 21.

La présence de cette tôle 20 est permise grâce à la disposition du toit escamotable selon l'invention dans le coffre 3 lorsque le toit est en position de rangement, et permet de renforcer la structure de la caisse du véhicule.

Outre les avantages de l'invention décrits plus haut, le toit escamotable selon l'invention permet non seulement d'obtenir un volume de rangement important dans la partie inférieure du coffre, mais permet également d'accéder facilement à ce volume de rangement. En effet, la figure 5 montre que les deux parties 9 qui prolongent latéralement le pavillon 6a créent à l'arrière du pavillon, une échancrure à la fois large et profonde qui facilite l'introduction de bagages à l'intérieur du coffre.

## Revendications

1. Toit escamotable pour véhicule automobile comprenant un premier élément (6) incluant le pavillon (6a) et un second élément (7) incluant la lunette arrière (7a), articulés l'un à l'autre et déplaçables entre une position de fermeture dans laquelle les deux éléments (6, 7) recouvrent l'habitacle (8) du véhicule et une position de rangement dans laquelle les deux éléments (6, 7) sont repliés l'un sur l'autre et rangés dans le coffre arrière (3) du véhicule, **caractérisé en ce que** le premier élément (6) comporte à l'arrière du pavillon (6a) et de chaque côté de celui-ci, un prolongement constituant une partie (9) du flanc latéral de la lunette arrière (7a) et **en ce que** le second élément (7) comporte de chaque côté de la lunette arrière (7a), un prolongement constituant la partie inférieure (10) du flanc latéral de la lunette arrière (7a), le bord avant du second élément (7) étant articulé au bord arrière du pavillon (6a) entre lesdits prolongements.

2. Toit escamotable selon la revendication 1, **caractérisé en ce que** le second élément (7) est articulé à l'arrière du pavillon (6a) et est déplaçable par rapport au premier élément (6) vers une position repliée dans laquelle chacune des deux parties inférieures (10) du flanc latéral de la lunette arrière (7a) est située en regard d'un bord longitudinal (6b) du pavillon (6a).

3. Toit escamotable selon l'une des revendications 1 ou 2, **caractérisé en ce que** lorsqu'il est en position de fermeture, l'extrémité inférieure (9a) du bord arrière de chacune des parties de flanc latéral (9) portées par le pavillon (6a) rejoint le bord adjacent (13) de la caisse du véhicule, de sorte que le joint entre le premier élément (6) et la vitre latérale (14) du véhicule est continu.

4. Toit escamotable selon l'une des revendications 1 à 3, **caractérisé en ce que** lorsqu'il est en position de fermeture, l'extrémité supérieure (9b) du bord arrière de chacune des parties de flanc latéral (9) portées par le pavillon (6a) est située sensiblement au milieu de la lunette arrière (7a).

5. Toit escamotable selon l'une des revendications 1 à 4, **caractérisé en ce que** les deux éléments (6, 7) sont déplaçables vers la position de rangement dans le coffre (3) du véhicule grâce à un système de bielles formant un parallélogramme déformable, la bielle arrière de ce système de bielles étant constituée par le second élément (7).

6. Toit escamotable selon l'une des revendications 1 à 5, **caractérisé en ce qu'**en position de rangement dans le coffre (3), le premier élément (6) s'étend sensiblement horizontalement à la partie supérieure du coffre (3), les deux parties de flanc (9) s'étendant vers l'arrière, chacune près d'une face latérale du coffre (3), le bord avant du pavillon (6a) étant dirigé vers l'habitacle (8) du véhicule.

7. Toit escamotable selon la revendication 6, **caractérisé en ce qu'**en position de rangement dans le coffre (3), la partie avant du pavillon (6a) fait saillie à l'intérieur de l'habitacle (8).

8. Véhicule automobile équipé d'un toit escamotable selon l'une des revendications 1 à 7.

9. Véhicule automobile selon la revendication 8, comprenant deux sièges avant (1) et une banquette arrière (2), **caractérisé en ce que** la partie supérieure (16) du dossier de la banquette arrière (2) est montée de façon pivotante entre une position normale dans laquelle elle est située dans le prolongement du reste du dossier et une position dans laquelle elle est repliée vers le bas et dégage une ouverture (17) de communication avec le coffre arrière (3) et **en ce que** lorsque le toit escamotable est rangé dans le coffre (3), une partie du pavillon (6a) traverse cette ouverture (17) et s'étend au-dessus de la partie supérieure (16) repliée du dossier de la banquette arrière (2).

10. Véhicule automobile selon la revendication 9, **caractérisé en ce que** le bord supérieur de la partie supérieure pivotante (16) du dossier de la banquette arrière (2) porte une tablette (18) qui lorsque cette partie supérieure (16) est repliée vers le bas, est adaptée pour masquer la partie du pavillon (6a) s'étendant au-dessus de ladite partie supérieure (16).

11. Véhicule automobile selon la revendication 10, **caractérisé en ce que** la lunette arrière (7a) comporte près de son bord inférieur un élément de tablette (19), qui, lorsque le toit escamotable est en position de fermeture est partiellement recouvert par la tablette (18) portée par la partie supérieure pivotante (16) du dossier ou recouvre celle-ci.

12. Véhicule automobile selon l'une des revendications 8 à 11, **caractérisé en ce qu'**une tôle de renfort (20) reliée au plancher (21) du véhicule, s'étend derrière le dossier de la banquette arrière (2).
